Europäisches Patentamt

European Patent Office

Office européen des brevets

(11) Publication number: **0 126 831**
**B1**

# EUROPEAN PATENT SPECIFICATION

(45) Date of publication of patent specification: 30.09.87

(21) Application number: 83830106.7

(22) Date of filing: 25.05.83

(51) Int. Cl.⁴: **F 16 L 13/00,** B 23 K 11/08, B 23 K 11/34

(54) Copper-aluminium couplings.

(43) Date of publication of application:
05.12.84 Bulletin 84/49

(45) Publication of the grant of the patent:
30.09.87 Bulletin 87/40

(84) Designated Contracting States:
AT DE FR GB NL SE

(56) References cited:
FR-A- 891 165
GB-A- 710 570
GB-A- 739 464
US-A-2 903 763
US-A-3 040 427

(73) Proprietor: **O.L.S. S.r.l.**
Via Nazario Sauro, 30
I-27038 Robbio Lomellina (IT)

(72) Inventor: **Ferrara, Arturo**
Via Nazario Sauro, 28
I-27038 Robbio Lomellina (Pavia) (IT)

(74) Representative: **Cicogna, Franco**
Ufficio Internazionale Brevetti Dott.Prof. Franco
Cicogna Via Visconti di Modrone, 14/A
I-20122 Milano (IT)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 126 831 B1

## Description

The present invention relates to a pretreated copper pipe, which has been so shaped as to be particularly effective to be coupled, by the so-called flash welding method, to aluminium pipes, of like thickness and diameter, to provide such a copper-aluminium coupling which is suitable for application to the evaporators made by the so-called Roll-bond method.

As it is well known, the evaporators made by the "Roll-bond" method are hydraulically coupled to the refrigerating circuit by means of aluminium small pipes or tubes, butt welded to copper pipe stubs and coupled to the evaporators.

Also known is the fact that, in order to make the mentioned copper-aluminium couplings, there are required pipes, especially copper pipes, having particular and well defined constructional and size characteristics.

More specifically, the butt welding of those pipes has to be carried out by a specifically designed method.

Presently the most used method is known to those skilled in the art as the "Schlatter" method, that is a flash welding method.

This method, in particular, requires that the pipes which are to be butt welded — one of copper and the other of aluminium be provided with like outer diameter and thickness.

Moreover the minimum thickness of said pipes is to be included within 1.25 and 1.50 mm, whereas the purity of the metal material is to be a very high one (99.7—99.9%) and the aluminium pipe is to be an annealed one, while the copper pipe is to be a crude one.

Thus, all the mentioned requirements make the welding process a highly cumbersome one, mainly as it is required that the copper pipe has such a thickness which is excessive for the conventional use of the pipe itself.

Moreover a near crude copper pipe, as required, makes difficult the downstream working operation on the pipe itself, since it is frequently necessary to vary the diameter thereof in order to provide, for example, narrower or tapering zones and other modifications.

Accordingly, the task of the present invention is to provide a coupling in which such a pretreated and shaped copper pipe is effective to be coupled to an aluminium pipe, by the conventional welding methods, while having a comparatively smaller thickness than that presently required, thereby providing great economical advantages.

Within that task, it is an object of the present invention to provide such a copper pipe stub which is so treated as to present an increased thickness at the welding zone and, contemporaneously, a work-hardened region at the enlarged and adjoining portion of the pipe, effective to allow for the pipe to resist against the mechanical stresses occurring in the welding end step.

According to the present invention the above task and object, as well as yet other objects which will become more apparent thereinafter, are achieved by a pipe coupling comprising a copper pipe or tube stub, effective to be coupled to an aluminium pipe for making evaporators and having an even thickness over the major part of its length, and an outer diameter substantially equal to that of said aluminium pipe, characterized in that the thickness of the copper pipe or tube stub over said major part is smaller than that of the aluminium pipe thereto it is to be welded, an increased · thickness zone being provided inside the end portion of said copper pipe stub to be welded, said increased thickness zone extending over and being restrained to the zone which is normally covered by the amorphous aluminium during the welding operations, and being formed by butt upsetting and creeping of the metal material, the stub portion adjoining said increased thickness region being work-hardened so that said pipe stub resists against the mechanical stresses occurring during the welding operations.

More specifically the annealed copper pipe stub has, initially, an even thickness of about 0.75 mm and it is enlarged successively at a zone thereof in such a way as to bring the thickness of said zone, at the portion to be welded, to about 1.25 mm, as it is required by the thereinabove mentioned flash welding method.

Further characteristics of the present invention, will become more apparent thereinafter from the following detailed description of an embodiment thereof, with reference to the accompanying drawing, where:

Fig. 1 is a diametrical longitudinal cross-section view illustrating a copper pipe or tube stub as used in the present invention arranged in an aligned position with respect to an aluminium pipe thereto it is to be butt welded;

Fig. 2 is a longitudinal cross-section view illustrating a copper pipe stub as used in the present invention, being butt welded to the related aluminium pipe.

As thereinabove stated, in order to provide a satisfactory coupling between copper and aluminium pipes, by means of the flash welding method, it is required that said pipes be provided with well defined thickness and outer diameter characteristics, and more specifically: the aluminium pipe is to be a very high purity annealed pipe, whereas the copper pipe is to be a "half-crude" copper pipe, also of very high purity; moreover, with respect to the thicknesses of said pipes, the required value of the portions to be joined is to be included within 1.5 and 1.25 mm.

The present invention affords the possibility of using copper pipes of comparatively smaller thicknesses, that is of 0.75 mm with great economical and workability advantages.

According to the present invention, the copper pipe stub has an even thickness of about 0.75 mm and it is pre-annealed according to the known methods.

In order to bring the thickness of the welding zone A, obtained by adding an outer collar 3 of amorphous aluminium, to the minimum required value of at least 1.25 mm, the end portion of the copper pipe stub 1 to be welded, is enlarged in the inside thereof by means of butt upsetting, carried out by known methods, which causes the metal material to suitably creep in such a way as to provide, inside the zone A, an annular enlarged region or zone, having the desired even thickness.

The several mechanical operations, which are necessary for making the enlarged zone 2, simultaneously provide the remaining portion of the copper pipe or tube stub 1 with an artificial work-hardened structure effective to allow for the pipe to resist against the compression load occurring during the end welding step, without undergoing any deformations.

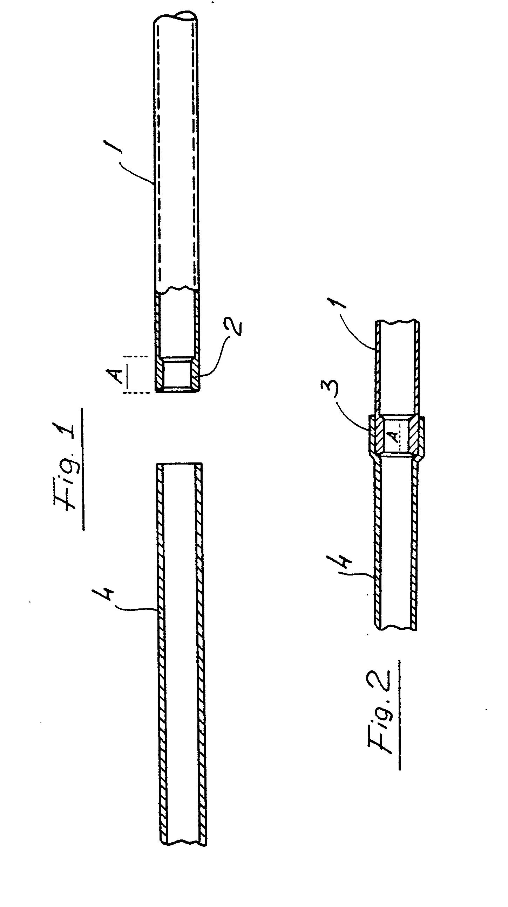

After having arranged as thereinabove stated the copper pipe stub, the butt welding to an aluminium pipe stub 4 (fig. 2) is carried out, easily, by the known flash welding method; the two welded pipes are shown in fig. 2, therein one may see the outer amorphous aluminium collar 3 covering the zone A of the copper pipe stub 1.

In practicing the invention, the outer collar 3 may be replaced by a separate collar to be welded at the require zone by means of known methods.

## Claims

1. A pipe coupling comprising a copper pipe or tube stub (1), effective to be coupled to an aluminium pipe (4) for making evaporators, and having an even thickness over the major part of its length, and an outer diameter substantially equal to that of said aluminium pipe characterized in that the thickness of the copper pipe or tube stub over said major part is smaller than that of the aluminium pipe thereto it is to be welded, an increased thickness zone (2) being provided inside the end portion of said copper pipe stub to be welded, said increased thickness zone extending over and being restrained to the zone which is normally covered by the amorphous aluminium (3) during the welding operations, and being formed by butt upsetting and creeping of the metal material, the stub portion adjoining said increased thickness region being work-hardened so that said pipe stub resists against the mechanical stresses occurring during the welding operations.

2. A coupling according to claim 1, characterized in that said enlarged zone (2) has such a thickness as to bring the end thickness at the welding zone (A) to a value substantially equal to that of the aluminium pipe (4) and at least to the minimum value required by the flash welding method.

3. A coupling according to claims 1 and 2, characterized in that, before forming said enlarged thickness zone (2), said pipe stub is subjected to an annealing treatment.

4. A coupling according to the preceding claims, characterized in that the thickness thereof, after the annealing treatment, is of about 0.75 mm.

## Patentansprüche

1. Rohrkupplung, bestehend aus einem Kupferrohr bzw. Rohrstumpf (1), welcher zur Kupplung mit einem Aluminiumrohr (4) zur Anfertigung von Verdämpfern vorgesehen ist und eine gleichmäßige Dicke über den größten Teil seiner Länge und einen im wesentlichen gleichen Außendurchmesser wie das genannte Aluminiumrohr aufweist, dadurch gekennzeichnet, daß die Dicke des Kupferrohres bzw. Rohrstumpfes über den genannten größten Teil kleiner ist als jene des Aluminiumrohres, mit welchem es bzw. er geschweißt werden soll, wobei eine Zone mit erhöhter Dicke im Inneren des Endabschnittes des genannten zu schweißenden Kupferrohrstumpfes vorgesehen ist, sich die genannte Zone mit erhöhter Dicke entlang der Zone, die üblicherweise durch amorphes Aluminium (3) bei den Schweißarbeiten bedeckt ist, erstreckt und an dieser beschränkt ist und durch Stoßstauchen und Kriechen des Metallmaterials erhalten wird, der an die genannte Zone mit erhöhter Dicke angrenzende Stumpfabschnitt durch Bearbeitung gehärtet wird, sodaß der Rohrstumpf den sich während den Schweißarbeiten vorkommenden mechanischen Beanspruchungen widersteht.

2. Kupplung nach Anspruch 1, dadurch gekennzeichnet, daß die erweiterte Zone (2) eine solche Dicke aufweist, um die Enddicke bei der Schweißzone (A) zu einem Wert zu bringen, der im wesentlichen wie jener des Aluminiumrohres (4) und mindestens der kleineste, vom schnellschweißverfahren erforderte Wert gleich ist.

3. Kupplung nach den Ansprüchen 1 und 2, dadurch gekennzeichnet, daß der Rohrstumpf vor der Bildung der Zone (2) mit erhöhter Dicke einer Härtbehandlung unterworfen wird.

4. Kupplung nach den vorhergehenden Ansprüchen, dadurch gekennzeichnet, daß seine Dicke nach der Härtbehandlung umgefähr 0,75 mm beträgt.

## Revendications

1. Accouplement pour tubes ou éléments de tuyaux en cuivre, apte à être accouplé à un tube en aluminium (4) pour la réalisation d'évaporateurs et ayant sur la partie plus grande de sa longueur une épaisseure uniforme et un diamètre extérieur sensiblement égal au diamètre dudit tube en aluminium, caractérisé en ce que l'épaisseur du tube ou de l'élément de tuyau en cuivre sur ladite partie plus grande est plus petite que l'épaisseur du tube en aluminium auquel il doit être soudé, une zone ayant une épaisseur augmentée (2) étant prévue à l'intérieur de la partie d'extrémité dudit élément de tuyau en cuivre qui doit être soudé, ladite zone à épaisseur augmentée s'étendant sur et étant limitée à la zone qui est normalement couverte par l'aluminium amorphe (3) pendant les opérations de soudage, et étant formée par refoulement et fluage du métal, la partie de tuyau adjacente à ladite zone ayant une épaisseur augmentée étant durcissie par usinage de manière que ledit élément de tuyau est apte à résister à les solicitations qui se développent pendant les opérations de soudage.

2. Accouplement selon la revendications 1, caractérisé en ce que ladite zone élargie (2) a une épaisseur apte à porter l'épaisseur finale en correspondance de la zone de soudage (A) à une valeur sensiblement égale à la valeur de l'épaisseur du tube en aluminium (4) et au moins à la valeur la plus petite qui est nécessaire pour la méthode de soudage par évaporation rapide.

3. Accouplement selon les revendications 1 et 2, caractérisé en ce que, avant la formation de ladite zone (2) ayant une épaisseur augmentée, ledit élément de tuyau est soumis à un traitement de recuit.

4. Accouplement selon les revendications précédentes, caractérisé en ce que l'épaisseur dudit accouplement, après le traitement de recuit, est d'environ 0,75 mm.

_Fig. 1_

_Fig. 2_

0 126 831